# EUROPEAN PATENT APPLICATION

(11) **EP 4 818 574 A1**
(43) Date of publication of application: **07.10.2026**
(21) Application number: 24897595.5
(22) Date of filing: 27.11.2024
(51) Int. Cl.: F21S 2/00, F21V 5/04, G02B 3/06, G02B 3/08, G02B 13/08, F21Y 103/10, F21Y 115/10

(54) **LIGHT IRRADIATION DEVICE AND LIGHT IRRADIATION METHOD**

(30) Priority: 01.12.2023 JP 2023203951
(71) Applicant: CCS Inc., Kyoto-shi, Kyoto 602-8011 (JP)
(72) Inventor: FUJITA, Atsuko, Kyoto-shi, Kyoto 602-8011 (JP)
(74) Representative: Müller Hoffmann & Partner
(86) International application number: PCT/JP2024/042013
(87) International publication number: WO 2025/115911

(57) **Abstract**

The present invention includes a plurality of light source bodies (2) arranged along a predetermined direction, and a lens (3) that has no curvature in the predetermined direction, has a curvature in a plane perpendicular to the predetermined direction, and condenses light of components that are emitted from the light source bodies (2) and travel along the plane perpendicular to the predetermined direction, in which an optical constant of the lens (3) is determined such that an area on a positive side of an aberration curve is larger than an area on a negative side of the aberration curve, the aberration curve being represented in a longitudinal aberration diagram in which, when viewed from the predetermined direction, an origin is an intersection between an optical axis (C) of the lens (3) and a surface of a workpiece, a horizontal axis is the optical axis (C) in which a light traveling direction is the positive side, and a vertical axis is a normalized pupil coordinate.

## Description

### Technical Field

The present invention relates to a light emitting device used for a surface inspection device, an exposure device, and the like, and particularly relates to a light irradiation device that irradiates a workpiece with linear or band-shaped light that is also referred to as line light.

### Background Art

As a light irradiation device of this type, for example, as illustrated in Patent Literature 1, there is known a light irradiation device of a so-called line light irradiation type, which emits light from a plurality of LEDs arranged in a line via a rod lens, and irradiates a workpiece with linear or band-shaped light.

Conventionally, in the case of using such a light irradiation device, it is recommended that the workpiece is installed at a position where light emitted from the LEDs is most condensed when viewed from a line direction of the LEDs (hereinafter, also referred to as a Z direction).

Conversely, in a case where a separation distance between the light irradiation device and the workpiece, that is, an installation recommended distance is determined in advance, an optical constant (curvature or the like) of the lens is determined such that light of the LEDs is most condensed at a position corresponding to the distance.

Thus, when the workpiece is installed at the installation recommended distance, irradiance on the workpiece is the highest, and thus, for example, in the field of surface inspection, a shutter speed of a camera at the time of imaging the workpiece can be increased, or imaging can be performed with a conveyance speed increased without stopping conveyance of the workpiece, and a lead time of the inspection can be shortened.

However, as a result of intensive studies, the present inventor has found for the first time that the highest irradiance in the light irradiation device of the line light irradiation type is not the installation recommended distance at which irradiance has been conventionally considered to be the highest, and has completed the present invention.

### Citation List

### Patent Literature

Patent Literature 1: JP 2017-150875 A

### Summary of Invention

### Technical Problem

The present invention has been made by overturning conventional technical common knowledge in a light irradiation device of a line light irradiation type, and has been made to sufficiently exhibit performance of the light irradiation device.

### Solution to Problem

That is, a light irradiation device according to the present invention is as follows.
[1] A light irradiation device that irradiates a workpiece with linear or band-shaped light extending along a predetermined direction, the light irradiation device including:
   a plurality of light source bodies arranged along the predetermined direction; and
   a lens that has no curvature in the predetermined direction, has a curvature in a plane perpendicular to the predetermined direction, and condenses light of components that are emitted from the light source bodies and travel along the plane perpendicular to the predetermined direction, in which
   an optical constant of the lens is determined so as to satisfy a first requirement, the first requirement being that an area on a positive side of an aberration curve is larger than an area on a negative side of the aberration curve, the aberration curve being represented in a longitudinal aberration diagram in which, when viewed from the predetermined direction, an origin is an intersection between an optical axis of the lens and a surface of the workpiece, a horizontal axis is the optical axis in which a light traveling direction is the positive side, and a vertical axis is a normalized pupil coordinate.
   With such a configuration, it is possible to maximize irradiance on the workpiece surface. In addition, since those deviating from the first requirement can be eliminated, optical design becomes easy. Note that the optical constant of the lens includes at least any one or more of a curvature, refractive index, thickness, number, installation position, front and back, aspheric coefficient, and conic constant of the lens.
[2] The light irradiation device according to [1], in which in the aberration curve, a second requirement is that a sum of inclinations at points separated by a minute distance is positive, and the optical constant of the lens is determined so as to further satisfy the second requirement.
   With such a configuration, since a degree of decrease in irradiance before and behind a distance at which irradiance is maximized, that is, an installation recommended distance can be set to be substantially symmetrical, even if a separation distance between the workpiece and the light irradiation device is shifted to either before or behind the installation recommended distance due to an arrangement error or the like, it is possible to prevent irradiance from rapidly decreasing.
[3] The light irradiation device according to [1] or [2], in which the optical constant of the lens is set such that condensing positions of light from the LED vary continuously or in a stepwise manner along a lens optical axis from a center toward an outer edge of the lens.

With such a configuration, since a degree of change in irradiance accompanying a change in the separation distance between the workpiece and the light irradiation device can be reduced, a range of a usable separation distance can be secured while securing constant irradiance before and behind a separation recommended distance. Furthermore, it is possible to further reduce the number of switching stages in a case where the separation recommended distance is switchable while constant irradiance is secured.

That is, it is possible to secure necessary irradiance on the workpiece while simplifying the configuration.

Note that the condensing position is a position where a light flux diameter is the smallest, and the light flux diameter is a diameter at which irradiance of a certain ratio (for example, 1/e²) or more with respect to maximum irradiance in a cross section perpendicular to the optical axis can be obtained.

[4] The light irradiation device according to [3], further including a distance variable structure capable of changing a distance between the lens and the LED in a stepwise manner.

With such a configuration, the separation recommended distance can be switched with a simple structure.

[5] The light irradiation device according to [3] or [4], in which the optical constant of the lens is set such that as light passes through a center portion of the lens, the condensing position of the light becomes closer to the lens.

Such a configuration can be realized, for example, by setting a curvature of the center portion of the lens to be larger than a curvature of a region outside the center portion. As a result, an edge thickness can be set to be thick and a center thickness can be set to be thin, and the lens can be easily manufactured. Specifically, an uneven thickness ratio (center thickness/edge thickness) is reduced, and not only injection moldability is improved, but also a volume can be reduced, so that manufacturing cost can be suppressed.

[6] The light irradiation device according to any one of [3] to [5], in which the lens is divided into a plurality of zones between the center and the outer edge, and a curvature in each zone is different.

With such a configuration, performance and a size that cannot be achieved by a continuously smooth lens surface can be achieved, and a degree of freedom in design can be increased. Here, the curvature in each zone is, for example, a curvature in a central portion of each zone.

[7] The light irradiation device according to [6], in which a curvature of a lens surface on which a light flux closest to parallel to the optical axis of the lens is incident is different in each zone.

With such a configuration, even when a step is formed at a boundary between the adjacent zones, it is possible to suppress light quantity loss and generation of stray light due to the step as much as possible. In addition, a viewing angle (collimation half angle) of a light source as viewed from one point of the lens surface defining each zone can be set as small as possible. As a result, it is not necessary to care for obliquely incident light, and it is less likely to be affected by manufacturing variation, and it is possible to set a plurality of condensing positions in a lens optical axis direction more accurately.

Further, the present invention may be a light irradiation method using a light irradiation device,
the light irradiation device including a plurality of light source bodies arranged along a predetermined direction, and a lens that has no curvature in the predetermined direction, has a curvature in a plane perpendicular to the predetermined direction, and condenses light of components that are emitted from the light source bodies and travel along the plane perpendicular to the predetermined direction, and irradiating a workpiece with linear or band-shaped light extending along the predetermined direction,
the light irradiation method including
determining an installation recommended distance of the workpiece such that an area on a positive side of an aberration curve is larger than an area on a negative side of the aberration curve, the aberration curve being represented in a longitudinal aberration diagram in which, when viewed from the predetermined direction, an origin is an intersection between an optical axis of the lens and a surface of the workpiece, a horizontal axis is the optical axis in which a light traveling direction is a positive side, and a vertical axis is a normalized pupil coordinate. Advantageous Effects of Invention

According to the present invention configured as described above, irradiance can be set to be the highest on a workpiece surface.

### Brief Description of Drawings

FIG. 1 is a perspective view illustrating an entire light irradiation device in an embodiment of the present invention.
FIG. 2 is a schematic diagram illustrating light traveling in a first XY plane including one LED in the embodiment.
FIG. 3 is a schematic diagram illustrating a conventional installation recommended distance.
FIG. 4 is a diagram for qualitatively describing a condensing position of each LED on the first XY plane as viewed from a Y direction.
FIG. 5 is a graph illustrating irradiance by one LED, irradiance by other LEDs, and combined irradiance thereof at each separation distance, and qualitatively illustrating the conventional installation recommended distance.
FIG. 6 is a longitudinal aberration diagram illustrating an aberration curve in the embodiment.
FIG. 7 is a qualitative graph illustrating irradiance by one LED, irradiance by other LEDs, and combined irradiance thereof at each separation distance, and illustrating an installation recommended distance in the embodiment.
FIG. 8 is a schematic diagram illustrating a curvature of a lens in the embodiment.
FIG. 9 is a schematic diagram illustrating a condensing position of light passing through each zone of the lens in the embodiment.
FIG. 10 is a graph illustrating a plurality of switchable installation recommended distances, and qualitatively illustrating a change in irradiance with an installation distance of a workpiece, a maximum irradiance curve, and a minimum guaranteed irradiance curve, in the embodiment.
FIG. 11 is a schematic diagram illustrating a configuration of a lens in another embodiment of the present invention.
FIG. 12 is a graph illustrating a plurality of switchable installation recommended distances and qualitatively illustrating a change in irradiance with an installation distance of a workpiece, a maximum irradiance curve, and a minimum guaranteed irradiance curve in the case of using a lens having small aberration without zone division.

### Description of Embodiments

Hereinafter, an embodiment of the present invention will be described with reference to the drawings.

A light irradiation device 100 according to the present embodiment is a light irradiation device of a line light irradiation type, which irradiates a workpiece with linear or linear band-shaped light (hereinafter, also referred to as line light), and is referred to as a line illumination device, a bar illumination device, or the like.

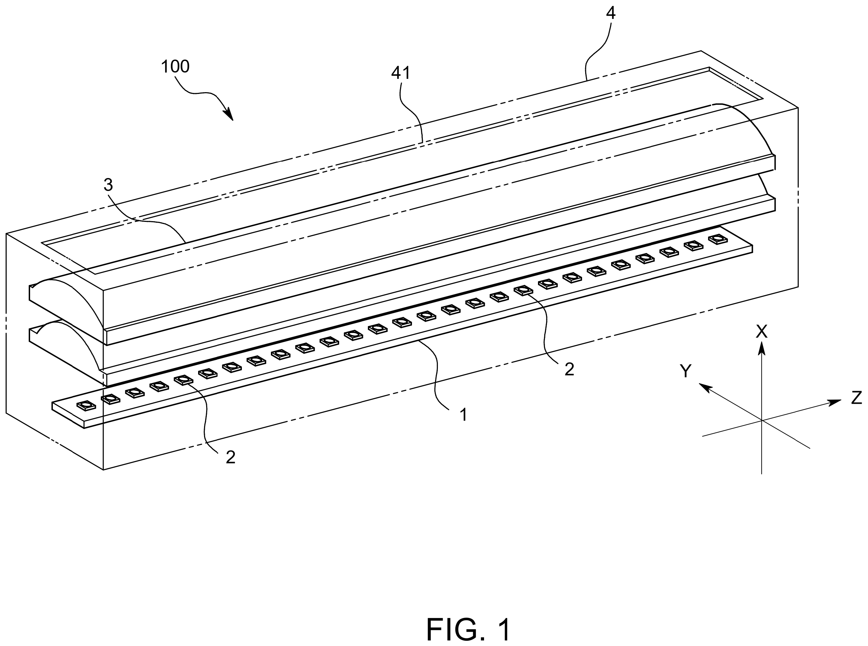

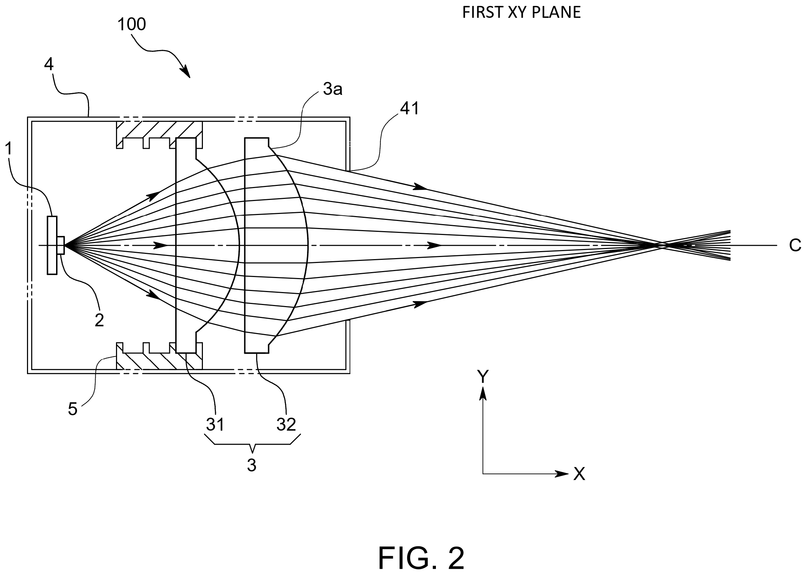

As illustrated in FIGS. 1 and 2, the light irradiation device 100 includes a substrate 1, an LED 2 as a light source body, a lens 3, a distance variable structure 5 capable of changing a distance between the lens 3 and the LED 2 in a stepwise manner, and a housing 4 that accommodates these components.

Each component will be described.

The substrate 1 has a linear band shape. As the substrate 1, a wiring substrate made of metal or resin is used.

The LED 2 is, for example, of a surface mount type, and a plurality of the LEDs 2 are mounted so as to be linearly arranged at regular intervals along a longitudinal direction of the substrate 1. These LEDs 2 are arranged in a row here, but may be arranged in a plurality of rows, or may be arranged at irregular intervals instead of regular intervals.

As illustrated in FIGS. 1 and 2, the lens 3 is a cylindrical type lens having no curvature in a cross section taken along an extending direction of the lens and having curvature in a cross section perpendicular to the extending direction, and is disposed on a LED mounting surface side of the substrate 1 such that the extending direction of the lens coincides with the longitudinal direction of the substrate 1 and a lens optical axis C passes through the LED 2 when viewed from the longitudinal direction.

Note that, although two lenses are illustrated here as the lens, one or three or more lenses may be used. Further, both surfaces of the lens may have curvatures in the cross section perpendicular to the extending direction. Further, the lens may be of a spherical type or of an aspherical type.

Hereinafter, for convenience of description, the longitudinal direction of the substrate 1 or the extending direction of the lens 3 matching the longitudinal direction is also referred to as a Z direction, a lens optical axis direction when viewed from the Z direction is also referred to as an X direction, and a direction orthogonal to the X direction and the Z direction is also referred to as a Y direction. In addition, FIG. 2 illustrates light traveling on a plane that is perpendicular to the Z direction and includes any one LED 2 (hereinafter, also referred to as a first XY plane).

As illustrated in FIG. 2, the distance variable structure 5 includes, for example, a plurality of grooves provided on both side walls of the housing 4 and extending in the Z direction (longitudinal direction). By fitting the lens 3 into any of the grooves, the distance between the LED 2 and the lens 3 can be switched in a plurality of stages. Note that, here, a position in the X direction of a first-stage lens 31 can be changed, but a position of a second-stage lens 32 may be changed, or both the positions may be changed. Further, a position of the substrate 1 may be changed.

The housing 4 has a quadrangular prism shape or a rectangular parallelepiped shape that holds the substrate 1 and the lens 3 so as to have the above-described relative positional relationship. An opening 41 is provided on a surface facing the lens 3 in the housing 4, and the line light is emitted from the opening 41.

In the light irradiation device 100 having such a configuration, an installation recommended distance that is a position where the workpiece should be placed with respect to the light irradiation device 100 or a position where the light irradiation device 100 should be placed with respect to the workpiece, is determined.

Therefore, first, a conventional installation recommended distance will be described.

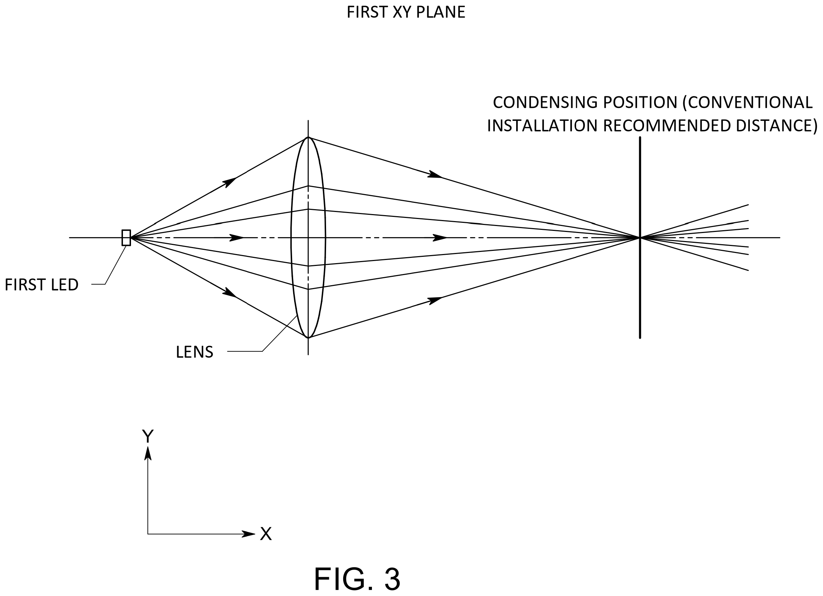

Conventionally, as illustrated in FIG. 3, attention has been paid to light traveling on the first XY plane, in other words, light that is emitted from one LED (here, indicated as a first LED) and does not include a Z direction component, and a distance to a condensing position that is a position where a light flux diameter of the light is the smallest, is set as the installation recommended distance. Then, a relative arrangement relationship between a workpiece and a light irradiation device is set so as to be the installation recommended distance, or an optical constant of a lens is set such that light is condensed at the predetermined installation recommended distance. Note that, in this figure, for easy understanding, light beams in a case where there is no aberration are illustrated.

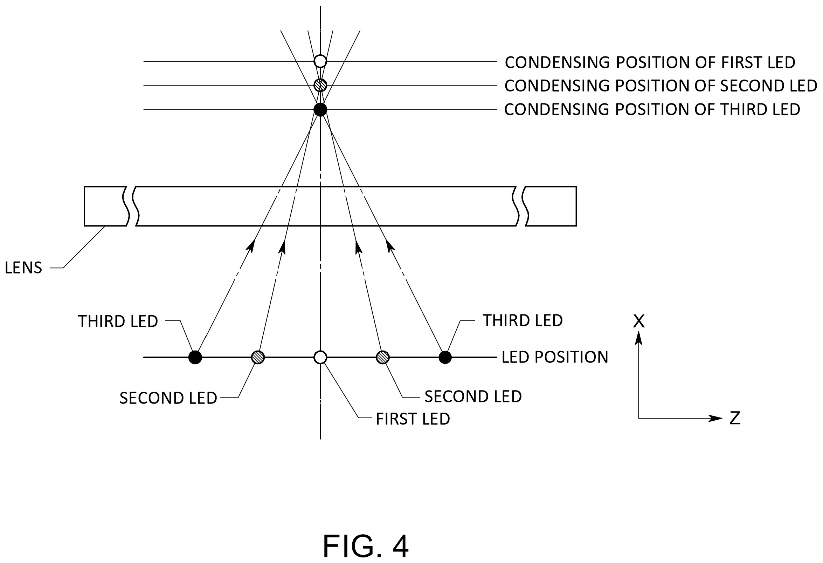

However, since light including the Z direction component is also emitted from the LED in practice, light from other LEDs also enters the first XY plane. For example, as illustrated in FIG. 4, condensing positions of light of LEDs (second LEDs and third LEDs) on both sides of the first LED on the first XY plane are closer to the light irradiation device than the installation recommended distance.

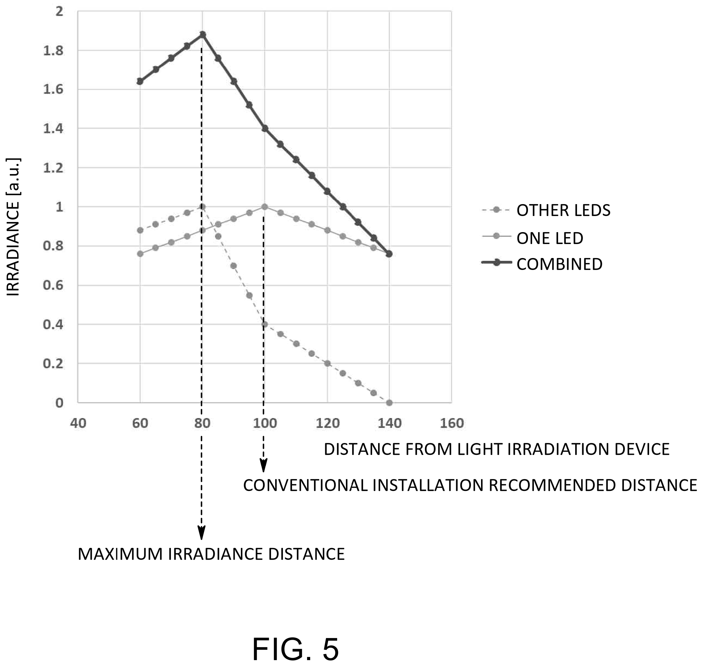

FIG. 5 is a graph showing irradiance for each separation distance between the light irradiation device and a workpiece surface on the first XY plane in consideration of other LEDs.

Conventionally, attention has been paid only to the first LED, a position where irradiance is maximized is determined as the installation recommended distance, but from this figure, it can be seen that a distance where combined irradiance including light of other LEDs is maximized is shorter than the installation recommended distance and is on the light irradiation device side.

As described above, the inventor of the present invention has found, for the first time that, in the light irradiation device of the line light irradiation type, a position where combined irradiance is maximized is closer to the light irradiation device than the conventional installation recommended distance. Then, in accordance with this finding and in view of the fact that there is aberration in practice as illustrated in FIG. 2, the light irradiation device 100 in this embodiment is configured.

Specifically, it is as follows.

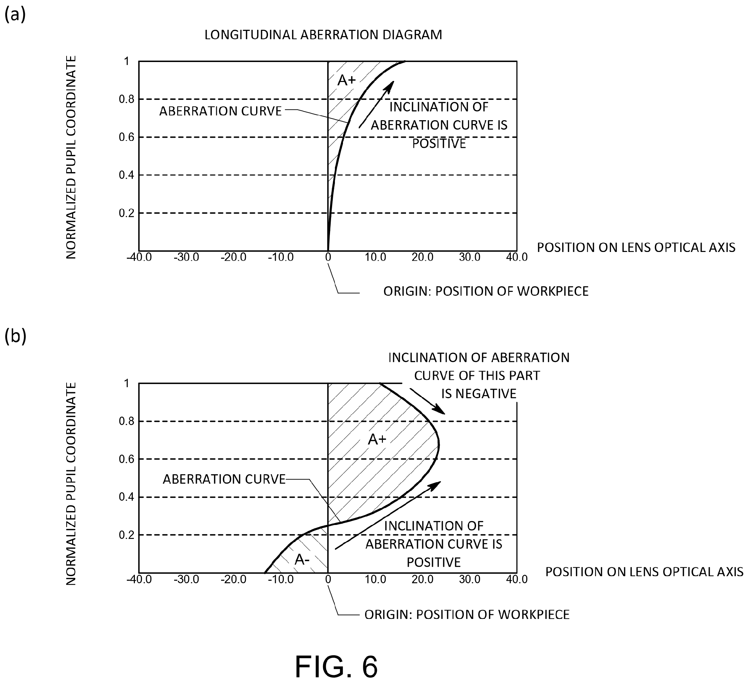

That is, as illustrated in FIG. 6, a longitudinal aberration diagram in which an origin is an intersection between the lens optical axis C and the workpiece surface on the first XY plane, a horizontal axis is the lens optical axis C (note that a light traveling direction is a positive side), and a vertical axis is a normalized pupil coordinate on the first XY plane, is considered. In the longitudinal aberration diagram, a first requirement is that an area on the positive side of an aberration curve of light emitted from the one LED 2 on the first XY plane is larger than an area on a negative side of the aberration curve, and an optical constant of the lens 3 (here, at least a curvature is included, but an optical constant excluding the curvature may be used.) or the installation recommended distance is determined so as to satisfy the first requirement.

The "pupil" herein is an image of a diaphragm (opening 41 in FIG. 2) that defines an emission diameter of light when viewed from the workpiece side.

The "area on the positive side" of the aberration curve herein is an area of a region surrounded by a vertical axis passing through the origin and the aberration curve on the positive side with respect to this vertical axis in the longitudinal aberration diagram, and is an area of "A+" in FIG. 6. The "area on the negative side" is an area of a region surrounded by the vertical axis passing through the origin and the aberration curve on the negative side with respect to this vertical axis, and is an area of "A-" in this figure.

In the case of FIG. 6(a), there is no aberration curve on the negative side, that is, there is no region of "A-", and the area thereof is 0, so that the first requirement is satisfied. In the case of FIG. 6(b), since the area of "A+" is larger than that of "A-", the first requirement is also satisfied.

By determining the installation recommended distance so as to satisfy at least the first requirement, combined irradiance on the workpiece surface can be maximized.

On the other hand, the inventor of the present invention has found, for the first time that in the conventional configuration, (combined) irradiance on the workpiece surface rapidly decreases in a direction away from the light irradiation device with a maximum irradiance distance as the center as illustrated in FIG. 5.

Therefore, in this embodiment, a second requirement is that a sum of inclination values at points separated by a minute distance in the aberration curve is positive, and an optical constant (here, at least a curvature is included, but an optical constant excluding the curvature may be used.) of the lens is determined so as to satisfy the second requirement.

For example, in FIG. 6(a), since inclinations are positive at all points of the aberration curve, the second requirement is satisfied. In addition, in FIG. 6(b), a part of the aberration curve has a negative inclination, but inclinations at other points are positive, and it is clear that the sum thereof is positive, and thus, the second requirement is satisfied.

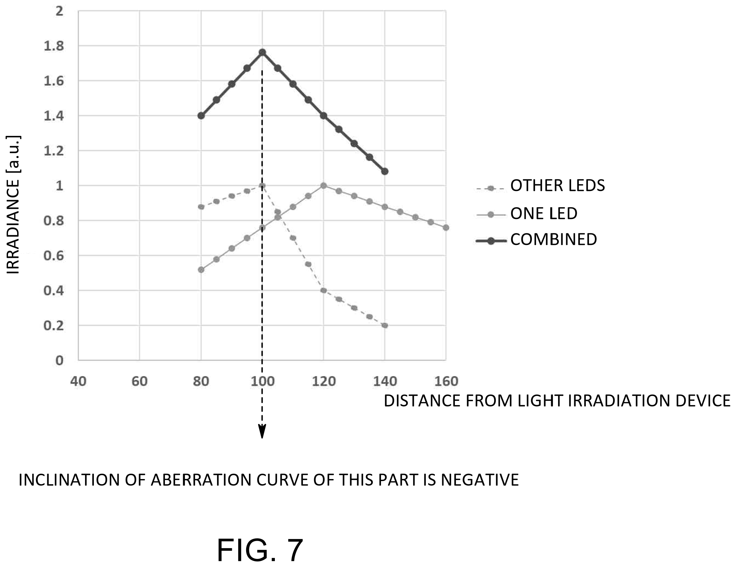

As a result, as illustrated in FIG. 7, a degree of decrease in irradiance before and behind the maximum irradiance distance with the maximum irradiance distance as the center can be made substantially symmetrical, and irradiance can be prevented from rapidly decreasing both before and behind the maximum irradiance distance. As a result, for example, an unexpected decrease in irradiance due to an arrangement error of the workpiece or the light irradiation device 100 can be prevented.

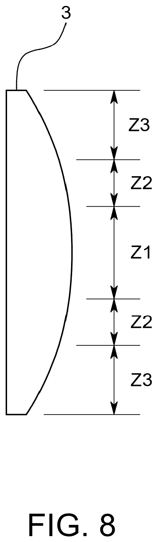

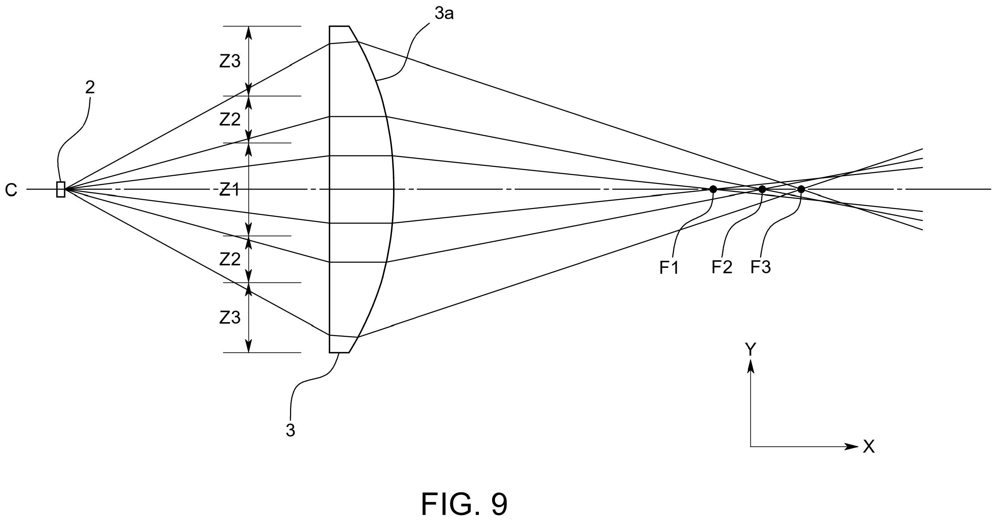

Further, in this embodiment, as illustrated in FIG. 8, the lens 3 is divided into a plurality of zones Z1 to Z3 from the center to an outer edge, and optical constants (here, curvatures) of the respective zones Z1 to Z3 in the lens 3 are different, and as illustrated in FIG. 9, condensing positions F1 to F3 of light passing through the respective zones Z1 to Z3 vary in a stepwise manner along the lens optical axis C.

Here, the curvature is set to be larger in the zone closer to the center, and as light passes through the zone closer to the center, the condensing position of the light becomes closer to the lens 3. Note that, in this figure, for convenience of description, the lens 3 is illustrated as one lens.

In addition, in the lens 3, a lens surface 3a (hereinafter, in order to distinguish from the other lens surface, the lens surface 3a is also referred to as a different curvature lens surface 3a.) on which a light flux closest to parallel to the lens optical axis C is incident has a different curvature in each zone. Referring to FIGS. 2 and 9, the different curvature lens surface 3a is a surface closest to the workpiece. Note that in a plurality of lenses including concave lenses, for example, the different curvature lens surface is not necessarily a surface closest to the workpiece.

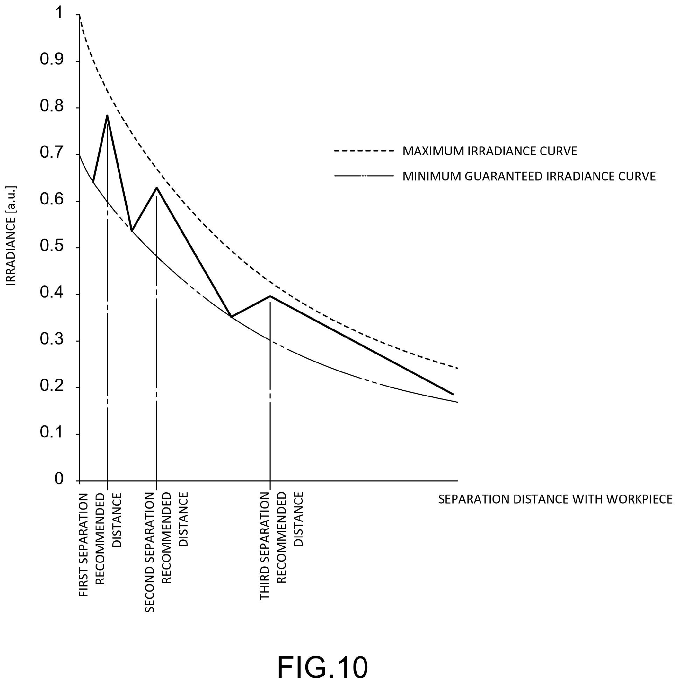

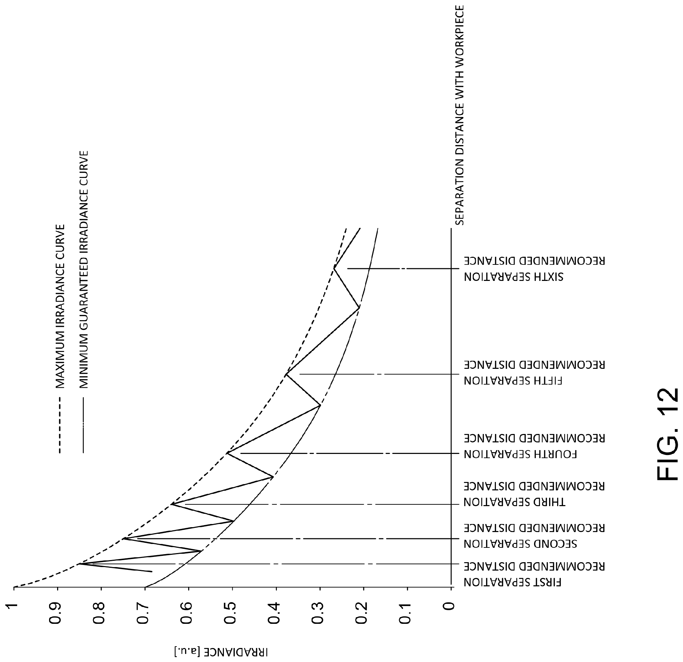

In such a configuration, in a case where, even if a separation distance between the workpiece and the light irradiation device 100 is arbitrarily changed, a minimum guaranteed irradiance at an arbitrary separation distance can be secured by setting a separation recommended distance of any of a plurality of stages, as illustrated in FIG. 10, a degree of decrease in irradiance before and behind the installation recommended distance becomes low, and a peak angle of the irradiance indicated by a solid line becomes larger than the case of using a lens having a small aberration without zone division illustrated in FIG. 12, so that the number of switching stages of the separation recommended distance can be reduced. In FIG. 10, for example, the number of switching stages of the separation recommended distance can be reduced to three stages. In this figure, irradiance at a constant rate (for example, 70%) of maximum irradiance is set as the minimum guaranteed irradiance.

Therefore, it is possible to secure necessary irradiance on the workpiece at a wide range of distances from the light irradiation device while reducing the number of switching stages of the separation recommended distance and simplifying the configuration.

Note that the present invention is not limited to the above embodiment.

For example, either the first requirement or the second requirement may be satisfied.

In the above embodiment, the plurality of zones are set in the lens, and the curvatures in the respective zones vary in a stepwise manner. However, another optical constant related to the lens, such as refractive indices of the respective zones, may vary to make the condensing positions different.

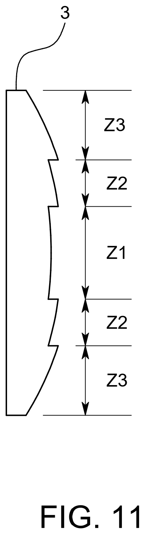

As illustrated in FIG. 11, a surface of the lens 3 in the respective zones Z1 to Z3 may be discontinuous like a Fresnel lens.

The curvatures of the lens may continuously vary.

In order to change the separation recommended distance in a plurality of stages, a plurality of lenses having different curvatures may be prepared, and these lenses may be interchangeable.

The separation recommended distance may be continuously changed.

The light source body is not limited to the LED, and may be another light source body such as a semiconductor laser.

In addition, the present invention is not limited to the above embodiments, and various modifications can be made without departing from the gist of the present invention.

### Industrial Applicability

According to the present invention, in a light irradiation device of a line light irradiation type, irradiance on a workpiece surface can be maximized.

### Reference Signs List

- 100: light irradiation device
- 2: LED (light source body)
- 3: lens
- A+: area on positive side
- A-: area on negative side

## Claims

1. A light irradiation device that irradiates a workpiece with linear or band-shaped light extending along a predetermined direction, the light irradiation device comprising:
a plurality of light source bodies arranged along the predetermined direction; and
a lens that has no curvature in the predetermined direction, has a curvature in a plane perpendicular to the predetermined direction, and condenses light of components that are emitted from the light source bodies and travel along the plane perpendicular to the predetermined direction, wherein
an optical constant of the lens is determined so as to satisfy a first requirement, the first requirement being that an area on a positive side of an aberration curve is larger than an area on a negative side of the aberration curve, the aberration curve being represented in a longitudinal aberration diagram in which, when viewed from the predetermined direction, an origin is an intersection between an optical axis of the lens and a surface of the workpiece, a horizontal axis is the optical axis in which a light traveling direction is the positive side, and a vertical axis is a normalized pupil coordinate.

2. The light irradiation device according to claim 1, wherein in the aberration curve, a second requirement is that a sum of inclinations at points separated by a minute distance is positive, and the optical constant of the lens is determined so as to further satisfy the second requirement.

3. A light irradiation method using a light irradiation device,
the light irradiation device including a plurality of light source bodies arranged along a predetermined direction, and a lens that has no curvature in the predetermined direction, has a curvature in a plane perpendicular to the predetermined direction, and condenses light of components that are emitted from the light source bodies and travel along the plane perpendicular to the predetermined direction, and irradiating a workpiece with linear or band-shaped light extending along the predetermined direction,
the light irradiation method comprising
determining an installation recommended distance to the workpiece so as to satisfy a first requirement, the first requirement being that an area on a positive side of an aberration curve is larger than an area on a negative side of the aberration curve, the aberration curve being represented in a longitudinal aberration diagram in which, when viewed from the predetermined direction, an origin is an intersection between an optical axis of the lens and a surface of the workpiece, a horizontal axis is the optical axis in which a light traveling direction is the positive side, and a vertical axis is a normalized pupil coordinate.
